# FASCICULE DE BREVET EUROPEEN

(11) **EP 1 043 645 B1**
(45) Date de publication et mention de la délivrance du brevet: **20.10.2004**
(21) Numéro de dépôt: 00400956.9
(22) Date de dépôt: 07.04.2000
(51) Int. Cl.: G05D 16/20, F04B 37/08

(54) **Système de régulation de pression d'une enceinte sous vide, groupe de pompage à vide pourvu d'un tel système**
Druckregelvorrichtung für eine Vakuumkammer, und eine mit einer solchen Vorrichtung versehenen Vakuumpumpeinheit
Pressure control system for a vacuum chamber, vacuum pumping unit provided with such a system

(30) Priorité: 07.04.1999 FR 9904347; 12.04.1999 FR 9904539
(43) Date de publication de la demande: 11.10.2000
(73) Titulaire: ALCATEL, 75008 Paris (FR)
(72) Inventeur: Rousseau, Claude, 74000 Annecy (FR); Pilotti, Patrick, 74960 Cran-Gevrier (FR); Maquin, Philippe, 74450 St. Jean de Sixt (FR)
(74) Mandataire: Lamoureux, Bernard

(56) Documents cités:
- EP-A- 0 690 235
- WO-A-99/04325
- DD-A- 262 065
- US-A- 4 699 570
- US-A- 5 165 864
- PATENT ABSTRACTS OF JAPAN vol. 10, no. 304 (M-626), 16 octobre 1986 (1986-10-16) & JP 61 116081 A (TOSHIBA CORP.), 3 juin 1986 (1986-06-03)

## Description

La présente invention concerne un système de régulation de pression dans une enceinte ou chambre de procédés pompée par un groupe de pompage à vide pour les procédés de fabrication et de traitement des composants à semi-conducteurs ou des dispositifs de micro ou nanotechnologies.

Dans les procédés industriels de fabrication ou de traitement de tels produits dans des enceintes ou chambres de procédés alimentées en gaz de traitement à des très basses pressions, il est nécessaire de régler la pression intérieure de l'enceinte. L'obtention et le maintien des très basses pressions, de l'ordre de 1 à 20 Pa, sont assurés par une ligne de vide qui comprend en général un groupe de pompage (pompe primaire et pompe secondaire) et des canalisations pour relier la chambre de procédés au groupe de pompage.

Nombreux sont les problèmes de contamination au cours des divers procédés de fabrication de semi-conducteurs ou de dispositifs de micro ou nanotechnologies. Certains sont relatifs à la ligne de vide qui extrait les gaz issus des chambres de procédés et plus précisément aux régimes de pompage. Un système de régulation de la pression dans l'enceinte contenant le substrat en fabrication (chambre de procédés) doit apporter une solution à certaines de ces contaminations.

Lorsqu'une chambre est pompée, le volume du gaz dans la chambre se détend, conduisant au refroidissement du gaz. Si la descente en pression est trop rapide la température du gaz chute et une transition de phase (gaz -->liquide, gaz -->solide) est amorcée. Des gouttelettes ou des particules se forment dans la canalisation et dans la chambre (au niveau du substrat). Elles peuvent rétrodiffuser de la canalisation vers la chambre et ainsi accroître la contamination de la chambre.

Si une descente en pression s'effectue rapidement, des mouvements de turbulence sont générés. Ces structures turbulentes arrachent des particules déposées dans les canalisations, et la chambre les transporte et les redistribue vers des zones qui peuvent être critiques (au niveau des substrats sur lesquels sont réalisés les circuits intégrés).

Un procédé connu pour effectuer la régulation de pression dans une enceinte pompée par une pompe à vide est d'utiliser en série, à l'aspiration de la pompe, une vanne à conductance variable permettant de faire varier le flux pompé et donc la pression dans l'enceinte. Le degré d'ouverture de la vanne est réglé par un signal de commande provenant d'un circuit de régulation en partant d'une pression de consigne et de la pression mesurée dans l'enceinte.

Cette structure à vanne à conductance variable est onéreuse et encombrante.

De plus , la vanne de régulation positionnée juste en sortie de chambre qui permet de réguler la pression dons la chambre pour des flux de gaz donnés , présente une surface importante pour le dépôt de particules générées, par les procédés, mais aussi pour tout dégazage et désorption. Les particules désorbées peuvent, par rétrodiffusion, contaminer à leur tour la chambre de procédés, réduisant ainsi la fiabilité du procédé. La présence de la vanne augmente et complique les opérations de maintenance dans lesquelles on doit effectuer un nettoyage périodique de la ligne de vide pour enlever les dépôts de particules générées par les procédés.

Egalement, la vanne à conductance variable présente une inertie mécanique inévitable qui augmente le temps de réaction de la ligne de vide. En pratique, une ligne de vide à vanne à conductance variable a un temps de réaction d'environ au moins 5 secondes pour faire passer la pression de la chambre de procédés d'une valeur à une autre entre deux étapes de procédé dans la plage des pressions habituelles de 1 à 20 Pa.

Un autre procédé connu est d'utiliser une pompe primaire mécanique ayant une vitesse de rotation variable asservie à une jauge de pression. Cependant, la gomme de flux de pompage contrôlable est trop limitée pour les applications semi-conducteurs. Il en résulte que, pour des vides importants, la régulation de la pression n'est pas efficace et une contamination risque de se développer.

Dans le domaine de la fabrication des semi-conducteurs, le document DD 262 065 A enseigne d'utiliser une ligne de vide comprenant une pompe primaire suivie de deux pompes secondaires de type Roots en série. La pompe primaire est une pompe rotative à palettes, entraînée en rotation à vitesse constante. Les pompes secondaires Roots sont commandées par un microcontrôleur par l'intermédiaire d'alimentations à fréquence variable pour moduler leur vitesse de rotation et faire ainsi varier la pression dans la chambre de procédés. Le document indique qu'il est ainsi possible de faire varier la pression dans la plage comprise entre 10 et 100 Pa. Le système n'est pas adapté pour permettre un contrôle efficace de la pression dans la plage d'excursion de pression allant jusqu'à la pression atmosphérique, et il ne permet pas d'atteindre une vitesse de réaction inférieure à celle obtenue par les lignes de vide à vannes à conductance variable.

Les documents EP-A-0 690 235 et US-A-4 699 570 décrivent un système de régulation de pression dans une enceinte reliée à un groupe de pompage par une canalisation à vanne à conductance variable. Le groupe de pompage comprend une pompe primaire, une pompe secondaire, avec un variateur de vitesse contrôlant simultanément les vitesses de rotation des deux pompes.

L'un des buts de la présente invention est d'augmenter sensiblement la gamme de flux de pompage contrôlable afin d'avoir une maîtrise de la régulation de pression dans toutes les étapes de procédé des applications semi-conducteurs et micro ou nanotechnologies.

Un autre but de la présente invention est d'augmenter la rapidité de réaction du système de pompage lors des transitions entre les étapes successives des procédés. On cherche notamment à obtenir un temps de réaction nettement inférieur à celui des lignes de vide à vannes à conductance variable.

A cet effet, l'invention concerne un système pour réguler la pression dans une enceinte destinée à contenir des gaz de procédés pour la fabrication de composants à semi-conducteurs ou de dispositifs de micro ou nanotechnologies, l'enceinte étant reliée par des canalisations à un groupe de pompage comprenant une pompe primaire mécanique sèche et au moins une pompe secondaire ;
selon l'invention, le système comprend un variateur de vitesses contrôlant simultanément les vitesses de rotation de la pompe primaire mécanique sèche et de ladite au moins une pompe secondaire.

Dans une forme de réalisation de l'invention, le variateur de vitesses est asservi à des profils prédéterminés de vitesses de rotation des pompes, calculés à partir des courbes de condensation des effluents contenus dans l'enceinte et les canalisations.

Avantageusement, seul ou en combinaison avec les courbes de condensation, le variateur de vitesse peut aussi être asservi à des profils prédéterminés de vitesses de rotation des pompes, calculés à partir des caractéristiques aérodynamiques d'écoulement non-turbulent des effluents dans l'enceinte et les canalisations.

Dans une autre forme de réalisation de l'invention, le système comprend :
- une jauge de pression, montée en amont de la pompe secondaire contrôlée, captant une pression, et
- un observateur ayant en entrées une valeur proportionnelle à la pression captée et une valeur proportionnelle à une consigne de pression variable, et en sortie un signal de commande du variateur de vitesses pour augmenter ou diminuer les vitesses de rotation des pompes en fonction des valeurs d'entrée.

Avantageusement le système peut comprendre une sonde de température, montée en amont de la pompe secondaire contrôlée, captant une température, l'observateur ayant, en entrée, une valeur proportionnelle à la température captée.

En outre le système peut comprendre un capteur de structure turbulente, monté en amont de la pompe secondaire contrôlée, quantifiant le degré de turbulence, l'observateur ayant, en entrée, une valeur proportionnelle au degré de turbulence quantifié.

L'invention concerne aussi un dispositif de pompage à vide comprenant un groupe de pompage ayant une pompe primaire mécanique sèche et au moins une pompe secondaire, une enceinte à vide, et des canalisations reliant l'enceinte à vide au groupe de pompage.

Selon l'invention le dispositif de pompage comprend un système de régulation de pression tel que décrit ci-dessus.

La pompe secondaire, contrôlée simultanément avec la pompe primaire sèche, peut être une pompe turbomoléculaire.

La pompe secondaire, contrôlée simultanément avec la pompe primaire sèche, peut être une pompe de type Roots. Dans ce cas, une pompe turbomoléculaire peut être intercalée entre la pompe secondaire contrôlée de type Roots et l'enceinte à pression régulée ou chambre de procédés.

L'un des avantages de la présente invention résulte de l'asservissement simultané de la pompe primaire et d'au moins une pompe secondaire du groupe de pompage. Cela permet d'obtenir une gamme de flux de pompage contrôlable allant de 10 à 10000 sccm (0,16 mbar l/sec à 166 mbar l/s) couvrant les besoins des applications semi-conducteurs. Cela permet en outre de réduire sensiblement le temps de réaction de la ligne de vide.

Selon un mode de réalisation particulièrement avantageux, l'observateur est programmé de façon à produire un signal de commande du variateur de vitesse présentant, à réception d'un échelon de consigne, une vitesse de réaction inférieure à 5 secondes et un taux de dépassement inférieur à 5 % lors des étapes du traitement de semi-conducteurs ou de dispositifs de micro ou nanotechnologies dans l'enceinte.

Par exemple, l'observateur est programmé de façon à agir en boucle ouverte pendant les étapes transitoires du procédé, et à agir en boucle fermée pendant les régimes permanents du procédé.

On réduit ainsi considérablement le temps de réaction du système, permettant de réagir nettement plus vite qu'avec les lignes de vide comportant une vanne à conductance variable.

D'autres avantages et caractéristiques de la présente invention résulteront de la description qui va suivre en référence aux dessins annexés dans lesquels :
- la figure 1 est une représentation schématique d'un système selon un mode de réalisation de l'invention ;
- la figure 2 est une représentation schématique d'un système selon un autre mode de réalisation de l'invention ;
- la figure 3 est une représentation schématique d'un système selon un autre mode de réalisation de l'invention ;
- les figures 4A et 4B sont des représentations schématiques de graphes représentant respectivement des courbes de condensation pour deux effluents possibles (H₂O et AlCl₃) et les profils de vitesse de rotation prédéterminés qui en découlent ;
- la figure 5 est une représentation schématique d'un système selon un autre mode de réalisation avantageux de l'invention ; et
- la figure 6 est un diagramme temporel illustrant la vitesse de réaction du système selon l'invention.

L'invention concerne un système pour réguler la pression dans une enceinte ou chambre de procédés 1, reliée par des canalisations 2 à un groupe de pompage 3 comprenant une pompe primaire mécanique sèche 4 et au moins une pompe secondaire 5. L'enceinte ou chambre de procédés 1 est destinée à être alimentée en gaz de traitement à basses pressions appropriées pour la fabrication et le traitement des composants à semi-conducteurs et des dispositifs de micro ou nanotechnologies.

Le système comprend un variateur de vitesses 6 contrôlant simultanément les vitesses de rotation de la pompe primaire mécanique sèche 4 et de la pompe secondaire 5.

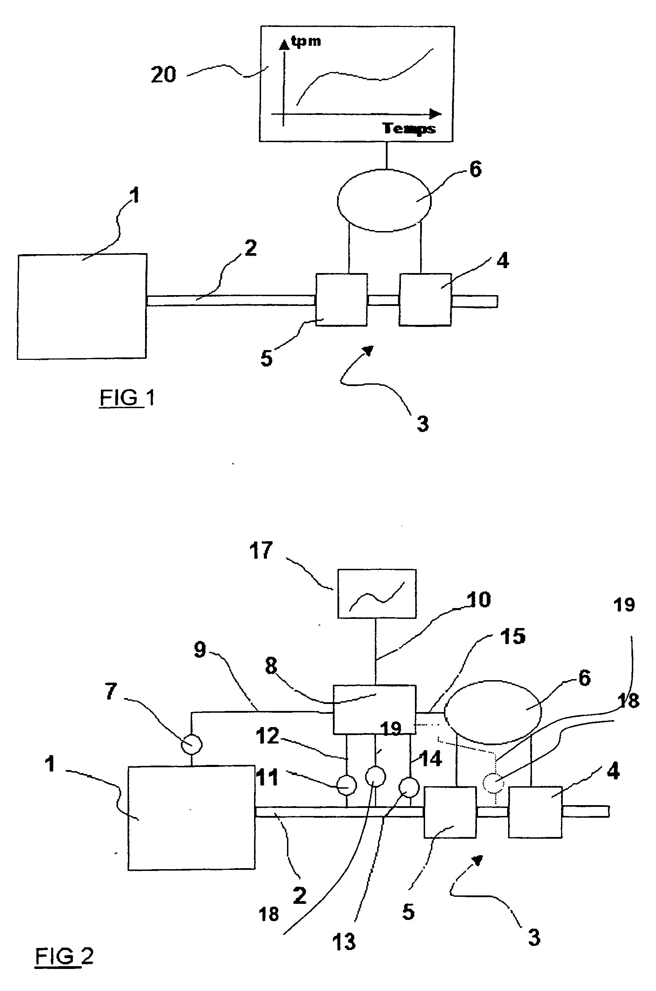

Dans une première forme de réalisation, représentée sur la figure 1, le variateur de vitesses 6 est asservi à des profils prédéterminés 20 de vitesses de rotation des pompes, calculés à partir des courbes de condensation des effluents contenus dans l'enceinte 1 et les canalisations 2.

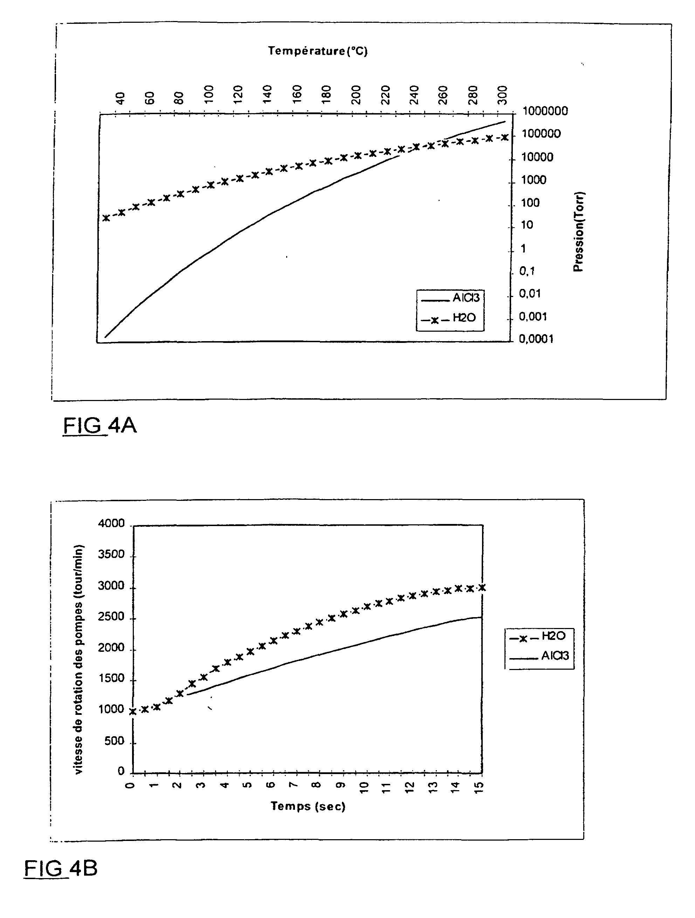

Les figures 4A et 4B représentent respectivement les courbes de condensations de deux effluents (H₂O et AlCl₃), et, pour ces effluents, les profils prédéterminés de vitesses de rotation des pompes pour éviter toute condensation desdits effluents. Les effluents H₂O et AlCl₃ sont donnés ici à titre d'exemples illustratifs de la première forme de réalisation de l'invention et ne sont aucunement limitatifs. Les profils prédéterminés de vitesses, représentés sur la figure 4B sont simples en ce qu'ils concernent chacun un effluent unique. On comprend que ces profils peuvent être largement plus compliqués quand l'enceinte 1 contient une pluralité d'effluents ayant des courbes de condensations différentes.

Dans le souci d'éviter que des dépôts contaminants ne se décrochent des parois de l'enceinte 1 et/ou des canalisations 2, les calculs des profils prédéterminés de vitesses de rotation des pompes, peuvent intégrer des caractéristiques aérodynamiques d'écoulement non-turbulent des effluents dans l'enceinte 1 et les canalisations 2. Ainsi, les profils prédéterminés de vitesses de rotation intègrent le fait que l'écoulement des effluents, résultant du pompage, doive rester le plus possible dans le domaine laminaire.

La pompe secondaire, contrôlée simultanément avec la pompe primaire, peut être une pompe turbomoléculaire.

La pompe secondaire, contrôlée simultanément avec la pompe primaire, peut être une pompe de type Roots. Dans ce cas, une pompe turbomoléculaire peut être intercalée entre la pompe secondaire contrôlée de type Roots et l'enceinte à pression régulée.

Dans une deuxième forme de réalisation illustrée sur la figure 2, le système comprend une jauge de pression 7, montée en amont de la pompe secondaire 5 contrôlée, captant une pression, et un observateur 8 ayant en entrées une valeur 9 proportionnelle à la pression captée et une valeur 10 proportionnelle à une consigne de pression variable 17, et en sortie un signal de commande 15 du variateur de vitesses 6 pour augmenter ou diminuer les vitesses de rotation des pompes en fonction des valeurs d'entrée 9, 10.

Afin d'affiner l'asservissement de la vitesse de rotation des pompes aux conditions optimales en limitant la contamination par condensation des effluents contenus dans l'enceinte 1 ou les canalisations 2, le système comprend en plus une sonde de température 11, montée en amont de la pompe secondaire 5 contrôlée, captant une température. L'observateur 8 a une voleur 1 2 supplémentaire en entrée, ladite valeur 12 étant proportionnelle à la température captée.

Afin d'intégrer dans la boucle d'asservissement la limitation de la contamination par décrochage de dépôts contaminants dû à un écoulement trop turbulent des effluents pompés, le système comprend un capteur de structure turbulente 13, monté en amont de la pompe secondaire 5 contrôlée, quantifiant le degré de turbulence. L'observateur 8 a une valeur 14 supplémentaire en entrée, ladite valeur 14 étant proportionnelle au degré de turbulence quantifié.

Le système peut, en outre, comprendre un capteur de particules 18, monté en amont et/ou en aval de la pompe secondaire 5 contrôlée , mesurant un niveau de particules, l'observateur 8 ayant en entrée une valeur 19 proportionnelle au nombre de particules dans les canalisations 2.

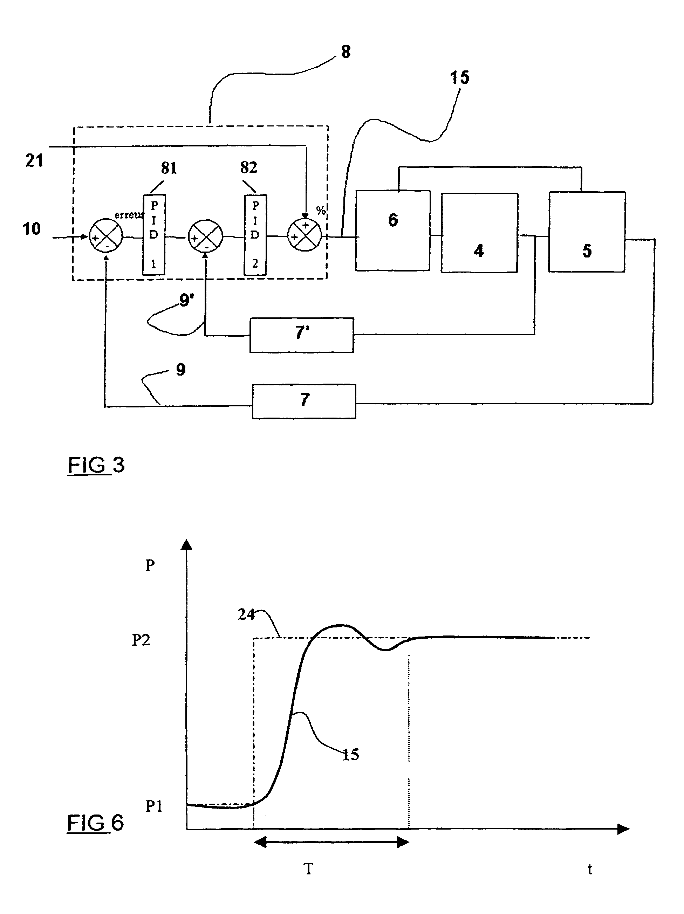

Dans une autre forme de réalisation de 'invention, représentée sur la figure 3, on retrouve l'observateur 8 qui pilote le variateur de vitesses 6 qui lui même alimente à fréquence variable et séparément la pompe primaire sèche 4 et au moins une pompe secondaire 5. Le système comprend une jauge de pression 7' montée en amont de la pompe primaire sèche 4 en plus de la jauge de pression 7 montée en amont de la pompe secondaire 5. L'observateur 8 renferme un premier algorithme 81, par exemple un algorithme PID, qui assure la régulation de la pression 9' à l'aspiration de la pompe primaire sèche 4 et optimise le temps de réponse de la pression 9 à l'aspiration de la pompe secondaire 5, et un second algorithme 82, par exemple un second algorithme PID, qui régule la pression 9 à l'aspiration de la pompe secondaire 5 pour optimiser l'erreur statique et l'instabilité en régime permanent. Pour diminuer la durée d'un transitoire entre un état de pression initiale et la consigne 10 d'un état de pression final , on ajoute à la boucle de régulation une consigne de référence 21 qui est fixée proche de la consigne de vitesse finale (processus stabilisé) ; cela permet de diminuer l'effet retardateur de la partie intégrale du PID.

Dans une autre forme de réalisation de l'invention, non représentée, le système comprend une jauge de pression montée en amont de la pompe primaire contrôlée , et/ou une jauge de pression montée en amont de la pompe secondaire. Le variateur de vitesses ou l'observateur contient une carte d'automatisme qui assure le passage optimal (le plus court possible) entre un état initial de pression de chambre (donc des vitesses de rotation des pompes ) et un état final de pression dans la chambre.

Cette carte d'automatisme peut renfermer des algorithmes de type logique floue (Fuzzy Logic en anglais) : on définit des règles mathématiques entre les pressions (valeurs absolues et relatives), les flux de gaz de procédés, les conductances et les paramètres qui régissent les profils des vitesses instantanées.

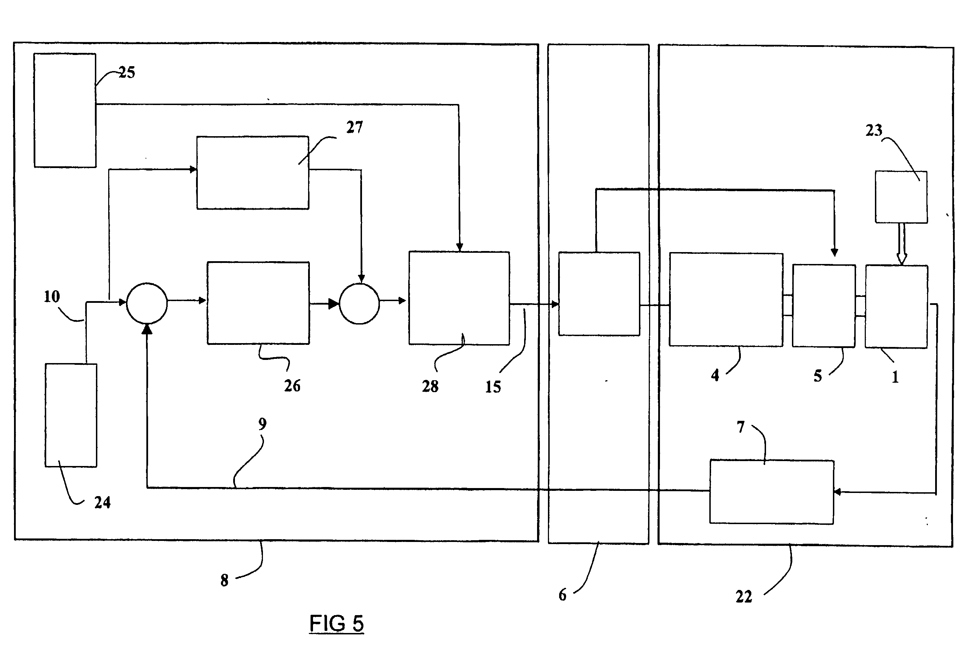

La figure 5 illustre un mode de réalisation particulièrement avantageux, permettant selon l'invention de réduire encore le temps de réaction du système. On retrouve, sur cette figure, un ensemble 22 de génération de vide et de procédés, avec la chambre de procédés 1 raccordée à l'aspiration de la pompe secondaire 5 elle-même raccordée à l'aspiration de la pompe primaire sèche 4. La pompe secondaire 5 et la pompe primaire sèche 4 sont toutes deux alimentées séparément à fréquence variable par le variateur de vitesses 6 lui-même piloté par l'observateur 8.

Dans le procédé mis en oeuvre à l'intérieur de la chambre de procédés, on contrôle la pression gazeuse régnant à l'intérieur de la chambre de procédés 1, on introduit des gaz de traitement par un dispositif d'introduction de gaz 23, et le procédé est piloté par un contrôleur non représenté qui détermine les étapes de procédé en fixant notamment une consigne de pression 24 et une consigne de flux gazeux 25. La consigne de pression 24 et la consigne de flux gazeux 25 sont envoyées à l'observateur 8, qui reçoit d'autres informations telles que notamment la valeur de pression communiquée par le capteur de pression 7 raccordé à la chambre de procédés 1.

L'observateur 8 est programmé de façon à produire un signal de commande 15 du variateur de vitesses 6 qui présente, à réception d'un échelon de consigne sur la consigne de pression 24 et/ou sur la consigne de flux gazeux 25 (ou sur toute autre consigne de paramètre surveillé par l'observateur 8 tel que la puissance de radiofréquence dans la chambre de procédés 1 par exemple), une vitesse de réaction T inférieure à 5 secondes et un taux de dépassement inférieur à 5 %. Cette vitesse de réaction est illustrée sur la figure 6, sur laquelle on a représenté la consigne de pression 24 en traits mixtes sous forme d'un échelon depuis une pression P1 de l'ordre de 1,33 Pa (10 m torr) jusqu'à une pression P2 de l'ordre de 12 Pa (90 m torr), et le signal de commande 15 du variateur qui suit rapidement l'échelon de consigne 24 pour se stabiliser après un temps de réaction T inférieur à 5 secondes. L'invention permet de réaliser un temps de réaction T par exemple de l'ordre de 1 seconde.

Pour atteindre ces grandes vitesses de réaction, la figure 5 illustre un mode de réalisation possible de l'observateur 8 : pour la régulation en régime permanent, l'observateur 8 agit par un programme 26 de type contrôleur numérique proportionnel et intégral continu, dans lequel on ajuste le gain et la constante de temps. L'approximation bi-linéaire permet d'accéder à l'équation récurrente du contrôleur numérique 26. Cette disposition permet d'améliorer la précision, la rapidité et la stabilité du procédé.

En réponse à un échelon de consigne, l'observateur 8 agit par un programme 27 de calcul en boucle ouverte, selon un calcul utilisant la forme polynomiale en temps qui, pour les systèmes linéaires, a l'avantage de conduire à des calculs simples. On optimise ainsi l'évolution du signal de commande 15 du variateur de vitesses 6 en fonction du temps, de façon à ne violer aucune contrainte lors de la transition entre deux états successifs du procédé dans la chambre de procédés 1.

Ainsi, l'observateur 8 est programmé de façon à agir en boucle ouverte pendant les étapes transitoires du procédé, et à agir en boucle fermée pendant les régimes permanents du procédé.

Dans la réalisation illustrée sur la figure 5, la consigne de flux agit sur un module 28 destiné à limiter les dépassements ou sous-évaluations lors d'un changement de consigne de pression, tout en gardant un temps de réponse optimisé. On peut programmer le module 28 en tenant compte des constantes de réaction du système de génération de vide et de procédé 22 en fonction des pressions et des flux compte tenu des flux de purge, des types de pompe, des conductances de ligne, du volume de la chambre de procédés 1, notamment.

Quelle que soit la forme de réalisation, la pompe secondaire, contrôlée simultanément avec la pompe primaire, peut être une pompe turbomoléculaire.

La pompe secondaire, contrôlée simultanément avec la pompe primaire, peut être une pompe de type Roots. Dans ce cas, une pompe turbomoléculaire peut être intercalée entre la pompe secondaire contrôlée de type Roots et l'enceinte à pression régulée. Les jauge, sonde, et capteur peuvent alors être indifféremment positionnés à l'aspiration ou au refoulement de la pompe turbomoléculaire intercalée.

L'invention concerne aussi un dispositif de pompage à vide comprenant un groupe de pompage 3 ayant une pompe primaire mécanique sèche 4 et au moins une pompe secondaire 5, une enceinte à vide 1, et des canalisations 2 reliant l'enceinte à vide 1 au groupe de pompage 3.

Il est important que la pompe primaire 4 soit une pompe mécanique sèche, de façon à éviter toute pollution des gaz par rétrodiffusion des liquides ou des huiles présents dans la pompe. De la sorte, le dispositif selon l'invention peut s'appliquer à la fabrication des semi-conducteurs et autres dispositifs de micro ou nanotechnologies.

Selon l'invention le dispositif de pompage comprend un système de régulation de pression tel que décrit ci-dessus.

## Revendications

1. Système pour réguler la pression dans une enceinte (1) destinée à contenir des gaz de procédés pour la fabrication de composants à semi-conducteurs ou de dispositifs de micro ou nanotechnologies, l'enceinte (1) étant reliée à un groupe de pompage (3) comprenant une pompe primaire (4) et au moins une pompe secondaire (5), le système comprenant un variateur de vitesses (6) contrôlant simultanément les vitesses de rotation de la pompe primaire (4) et de ladite ou moins une pompe secondaire (5), **caractérisé en ce que**:
- la pompe primaire (4) est une pompe mécanique sèche,
- l'enceinte (1) est reliée au groupe de pompage (3) par des canalisations (2) dépourvues de vanne à conductance variable.

2. Système selon la revendication 1 **caractérisé en ce que** le variateur de vitesses (6) est asservi à des profils prédéterminés (20) de vitesses de rotation des pompes, calculés à partir des courbes de condensation des effluents contenus dans l'enceinte (1) et les canalisations (2).

3. Système selon la revendication 1 ou 2 **caractérisé en ce que** le variateur de vitesses (6) est asservi à des profils prédéterminés (20) de vitesses de rotation des pompes, calculés à partir des caractéristiques aérodynamiques d'écoulement non-turbulent des effluents dans l'enceinte (1) et les canalisations (2).

4. Système selon la revendication 1 **caractérisé en ce qu'**il comprend une jauge de pression (7), montée en amont de la pompe secondaire (5) contrôlée, captant une pression, et un observateur (8) ayant en entrées une valeur (9) proportionnelle à la pression captée et une valeur (10) proportionnelle à une consigne de pression variable (17), et en sortie un signal de commande (15) du variateur de vitesses (6) pour augmenter ou diminuer les vitesses de rotation des pompes (4, 5) en fonction des valeurs d'entrée.

5. Système selon la revendication 4 **caractérisé en ce qu'**il comprend une jauge de pression (7'), montée en amont de la pompe primaire sèche (4) contrôlée, captant une pression, l'observateur (8) ayant en entrée une valeur (9') proportionnelle à la pression captée.

6. Système selon la revendication 4 ou 5 **caractérisé en ce qu'**il comprend une sonde de température (11), montée en amont de la pompe secondaire (5) contrôlée, captant une température, l'observateur (8) ayant, en entrée, une valeur (12) proportionnelle à la température captée.

7. Système selon l'une quelconque des revendications 4 à 6 **caractérisé en ce qu'**il comprend un capteur de structure turbulente (13), monté en amont de la pompe secondaire (5) contrôlée, quantifiant le degré de turbulence, l'observateur (8) ayant, en entrée, une voleur (14) proportionnelle au degré de turbulence quantifié.

8. Système selon l'une quelconque des revendications 4 à 7 **caractérisé en ce qu'**il comprend un capteur de particules (18), monté en amont et/ou en aval de la pompe secondaire contrôlée, mesurant un niveau de particules, l'observateur (8) ayant en entrée une valeur (19) proportionnelle au nombre de particules dans les canalisations.

9. Système selon l'une quelconque des revendications 4 à 8, **caractérisé en ce que** l'observateur (8) est programmé de façon à produire un signal de commande (15) du variateur de vitesses (6) présentant, à réception d'un échelon de consigne (24, 25), une vitesse de réaction (T) inférieure à 5 secondes et un taux de dépassement inférieur à 5 % lors des étapes du traitement de semi-conducteurs ou de dispositifs de micro ou nanotechnologies dans l'enceinte (1).

10. Système selon la revendication 9, **caractérisé en ce que** l'observateur (8) est programmé de façon à agir en boucle ouverte pendant les étapes transitoires du procédé, et à agir en boucle fermée pendant les régimes permanents du procédé.

11. Dispositif de pompage à vide comprenant un groupe de pompage (3) ayant une pompe primaire (4) et au moins une pompe secondaire (5), une enceinte à vide (1), et des moyens (2) reliant l'enceinte à vide (1) au groupe de pompage (3), **caractérisé en ce qu'**il comprend un système de régulation de pression selon l'une quelconque des revendications 1 à 10.

12. Dispositif de pompage selon la revendication 11 **caractérisé en ce que** la pompe secondaire (5), contrôlée simultanément avec la pompe primaire sèche (4), est une pompe turbomoléculaire.

13. Dispositif de pompage selon la revendication 11 **caractérisé en ce que** la pompe secondaire (5), contrôlée simultanément avec la pompe primaire sèche (4), est une pompe de type Roots.

14. Dispositif de pompage selon la revendication 13 **caractérisé en ce qu'**il comprend une pompe turbomoléculaire entre la pompe secondaire (5) contrôlée de type Roots et l'enceinte (1) à vide.

## Patentansprüche

1. Vorrichtung zur Druckregelung in einer Kammer (1), in der Prozessgase zur Herstellung von Halbleiter-Bauteilen oder Vorrichtungen aus dem Bereich der Mikro- oder Nanotechnologie enthalten sind, wobei die Kammer (1) mit einer Pumpeinheit (3) verbunden ist, die eine Vorvakuumpumpe (4) und mindestens eine Sekundärpumpe (5) beinhaltet, wobei die Vorrichtung einen Regelantrieb (6) enthält, der gleichzeitig die Drehzahl der Vorvakuumpumpe (4) und der genannten, mindestens einen Sekundärpumpe (5) steuert, **dadurch gekennzeichnet, dass**:
- es sich bei der Vorvakuumpumpe (4) um eine mechanische, trockene Pumpe handelt,
- die Kammer (1) mit der Pumpeinheit (3) über Rohrleitungen (2) verbunden ist, die mit einem Ventil mit variablem Strömungsleitwert versehen sind.

2. Vorrichtung gemäß Anspruch 1, **dadurch gekennzeichnet, dass** der Regelantrieb (6) mit vordefinierten Profilen (20) für die Drehzahl der Pumpen geregelt wird, die auf der Grundlage der Kondensationskurven der in der Kammer (1) und den Rohrleitungen (2) enthaltenen Abgase berechnet werden.

3. Vorrichtung gemäß Anspruch 1 oder 2, **dadurch gekennzeichnet, dass** der Regelantrieb (6) mit vordefinierten Profilen (20) für die Drehzahl der Pumpen geregelt wird, die auf der Grundlage der aerodynamischen, stationären Fließeigenschaften der Abgase in der Kammer (1) und den Rohrleitungen (2) berechnet werden.

4. Vorrichtung gemäß Anspruch 1, **dadurch gekennzeichnet, dass** sie ein Druckmessgerät (7), das vor der geregelten Sekundärpumpe (5) installiert ist und den Druck erfasst, und einen Beobachter (8) enthält, an dessen Eingängen ein Wert (9) anliegt, der proportional zum erfassten Druck ist, sowie ein Wert (10), der proportional zu einem variablen Druck-Einstellwert (17) ist, und an dessen Ausgang ein Steuersignal (15) für den Regelantrieb (6) anliegt, um die Drehzahl der Pumpen (4, 5) in Abhängigkeit von den Eingangswerten zu steigern oder zu verringern.

5. Vorrichtung nach Anspruch 4, **dadurch gekennzeichnet, dass** sie ein Druckmessgerät (7') enthält, das vor der geregelten, trockenen Vorvakuumpumpe (4) installiert ist und den Druck erfasst, wobei am Eingang des Beobachters (8) ein Wert (9') anliegt, der proportional zu dem erfassten Druck ist.

6. Vorrichtung gemäß Anspruch 4 oder 5, **dadurch gekennzeichnet, dass** sie einen Temperaturfühler (11) enthält, der vor der geregelten Sekundärpumpe (5) installiert ist und die Temperatur erfasst, wobei am Eingang des Beobachters (8) ein Wert (12) anliegt, der proportional zur erfassten Temperatur ist.

7. Vorrichtung gemäß einem der Ansprüche 4 bis 6, **dadurch gekennzeichnet, dass** sie einen Verwirbelungssensor (13) enthält, der vor der geregelten Sekundärpumpe (5) installiert ist und den Verwirbelungsgrad erfasst, wobei am Eingang des Beobachters (8) ein Wert anliegt, der proportional zum erfassten Verwirbelungsgrad ist.

8. Vorrichtung gemäß einem der Ansprüche 4 bis 7, **dadurch gekennzeichnet, dass** sie einen Partikelsensor (18) enthält, der vor und/oder hinter der geregelten Sekundärpumpe installiert ist und den Partikelgehalt erfasst, wobei am Eingang des Beobachters (8) ein Wert (19) anliegt, der proportional zur Anzahl der Partikel in den Rohrleitungen ist.

9. Vorrichtung gemäß einem der Ansprüche 4 bis 8, **dadurch gekennzeichnet, dass** der Beobachter (8) so programmiert ist, dass er ein Steuersignal (15) für den Regelantrieb erzeugt, der beim Empfang einer Einstellstufe (24, 25) für die Verarbeitungsphasen von Halbleitern oder Vorrichtungen aus dem Bereich Mikro- oder Nanotechnologie in der Kammer (1) eine Reaktionsgeschwindigkeit (T) unter 5 Sekunden sowie einen Überschreitungsfaktor unter 5 % aufweist.

10. Vorrichtung gemäß Anspruch 9, **dadurch gekennzeichnet, dass** der Beobachter (8) so programmiert ist, dass er während der Übergangsphasen im Prozess im offenen Wirkungskreis und während der Beharrungszustände im Prozess im geschlossenen Wirkungskreis funktioniert.

11. Vakuumpumpeinheit, bestehend aus einer Pumpeinheit (3) mit einer Vorvakuumpumpe (4) und mindestens einer Sekundärpumpe (5), einer Vakuumkammer (1) und Mitteln (2), die die Vakuumkammer (1) mit der Pumpeinheit (3) verbinden, **dadurch gekennzeichnet, dass** sie eine Druckregelvorrichtung gemäß einem der Ansprüche 1 bis 10 beinhaltet.

12. Pumpvorrichtung gemäß Anspruch 11, **dadurch gekennzeichnet, dass** es sich bei der Sekundärpumpe (5), die gleichzeitig mit der trockenen Vorvakuumpumpe (4) geregelt wird, um eine Turbomolekularpumpe handelt.

13. Pumpvorrichtung gemäß Anspruch 11, **dadurch gekennzeichnet, dass** es sich bei der Sekundärpumpe (5), die gleichzeitig mit der trockenen Vorvakuumpumpe (4) geregelt wird, um eine Roots-Pumpe handelt.

14. Pumpvorrichtung gemäß Anspruch 13, **dadurch gekennzeichnet, dass** sie zwischen der geregelten Roots-Sekundärpumpe (5) und der Vakuumkammer (1) eine Turbomolekularpumpe beinhaltet.

## Claims

1. A system for regulating the pressure in an enclosure (1) that is to contain processed gas for manufacturing semiconductor components or micro- or nano-technology devices, the enclosure (1) being connected to a pump unit (3) comprising a primary pump (4) and at least one secondary pump (5), the system comprising a speed controller (6) controlling simultaneously the rotation speeds of the primary pump (4) and of said at least one secondary pump (5), **characterized in that**:
- the primary pump (4) is a mechanically dry pump,
- the enclosure (1) is connected to the pump unit (3) by pipework (2) with no variable conductance valve.

2. A system according to claim 1, **characterized in that** the speed controller (6) is servo-controlled to predetermined rotary speed profiles (20) for the pumps calculated on the basis of condensation curves for the effluents contained in the enclosure (1) and the pipework (2).

3. A system according to claim 1 or 2, **characterized in that** the speed controller (6) is servo-controlled to predetermined rotary speed profiles (20) for the pumps, calculated on the basis of aerodynamic characteristics for non-turbulent flow of the effluents in the enclosure (1) and the pipework (2).

4. A system according to claim 1, **characterized in that** it comprises a pressure gauge (7) mounted upstream from the controlled secondary pump (5) to monitor pressure, and an observer (8) having an input value (9) proportional to the monitored pressure and an input value (10) proportional to a variable reference pressure (17), and outputting a control signal (15) to the speed controller (6) to increase or decrease the speeds of rotation of the pumps (4, 5) as a function of its input values.

5. A system according to claim 4, **characterized in that** it comprises a pressure gauge (7') mounted upstream from the controlled dry primary pump (4) to monitor pressure, the observer (8) having an input value (9') proportional to the monitored pressure.

6. A system according to claim 4 or 5, **characterized in that** it comprises a temperature probe (11) mounted upstream from the controlled secondary pump (5) to monitor temperature, the observer (8) having an input value (12) proportional to the monitored temperature.

7. A system according to any one of claims 4 to 6, **characterized in that** it comprises a turbulence structure sensor (13) mounted upstream from the controlled secondary pump (5) to quantify the degree of turbulence, the observer (8) having an input value (14) proportional to the quantified degree of turbulence.

8. A system according to any one of claims 4 to 7, **characterized in that** it comprises a particle sensor (18) mounted upstream and/or downstream from the controlled secondary pump to measure the level of particles, the observer (8) having an input value (19) proportional to the number of particles in the pipework.

9. A system according to any one of claims 4 to 8, **characterized in that** the observer (8) is programmed to produce a control signal (15) for the speed controller (6) that responds to receiving a step in its reference (24, 25) by presenting a reaction time (T) of less than 5 second and an overshoot of less than 5% during steps in the treatment of semiconductors or of micro- or nano-technology devices in the enclosure (1).

10. A system according to claim 9, **characterized in that** the observer (8) is programmed to operate in open loop mode during transient stages of the process and to operate in closed loop mode during steady conditions of the process.

11. Pumping apparatus comprising a pump unit (3) having a primary pump (4) and at least one secondary pump (5), a vacuum enclosure (1), and means (2) connecting the vacuum enclosure (1) to the pump unit (3), the apparatus being **characterized in that** it comprises a pressure regulator system according to any one of claims 1 to 10.

12. Pumping apparatus according to claim 11, **characterized in that** the secondary pump (5), controlled simultaneously with the dry primary pump (4), is a turbomolecular pump.

13. Pumping apparatus according to claim 11, **characterized in that** the secondary pump (5), controlled simultaneously with the dry primary pump (4), is a Roots type pump.

14. Pumping apparatus according to claim 13, **characterized in that** it comprises a turbomolecular pump between the Roots type controlled secondary pump (5) and the vacuum enclosure (1).
